# EUROPEAN PATENT SPECIFICATION

(11) **EP 2 663 932 B1**
(45) Date of publication and mention of the grant of the patent: **30.12.2020**
(21) Application number: 12787228.1
(22) Date of filing: 22.10.2012
(51) Int. Cl.: G06F 17/00, G06F 40/106, G06F 40/166, G06F 40/14

(54) **SYSTEMS, METHODS, AND INTERFACES FOR DISPLAY OF INLINE CONTENT AND BLOCK LEVEL CONTENT ON AN ACCESS DEVICE**
SYSTEME, VERFAHREN UND SCHNITTSTELLEN ZUR ANZEIGE VON INLINE-INHALTEN UND ZUR SPERRUNG VON LEVEL-INHALTEN AUF EINER ZUGANGSVORRICHTUNG
SYSTÈMES, PROCÉDÉS ET INTERFACES POUR L'AFFICHAGE D'UN CONTENU EN LIGNE ET D'UN CONTENU DE NIVEAU DE BLOC SUR UN DISPOSITIF D'ACCÈS

(30) Priority: 21.10.2011 US 201113278568
(43) Date of publication of application: 20.11.2013
(73) Proprietor: Thomson Reuters Enterprise Centre GmbH, 6300 Zug (CH)
(72) Inventor: BENNETT, DANIEL, New York, NY 10032 (US); DAUP, JOHN SCOTT, New York, NY 10032 (US)
(74) Representative: IPrime Rentsch Kaelin AG
(86) International application number: PCT/US2012/061255
(87) International publication number: WO 2013/059766

(56) References cited:
- US-A1- 2011 025 624
- US-A1- 2011 242 007
- US-A1- 2013 007 602
- US-B1- 6 275 829
- US-B1- 7 783 967
- anon: "CSS overflow Property", w3schools.org , 3 July 2011 (2011-07-03), XP002696961, Retrieved from the Internet: URL:http://web.archive.org/web/20110703190 448/http://www.w3schools.com/cssref/pr_pos _overflow.asp [retrieved on 2013-05-14]
- Suzanne Fyhrie Parrott: "How Automated eBook Conversions go Wrong (Mobie EPUB)", www.unrulyguides.com , 9 May 2011 (2011-05-09), XP002696962, Retrieved from the Internet: URL:http://www.unrulyguides.com/2011/05/au tomated-ebook-conversion-problems-for-mobi -and-epub/ [retrieved on 2013-05-10]

## Description

### TECHNICAL FIELD

Various embodiments of the present invention concern systems, methods and interfaces for displaying block level content on mobile access device.

### BACKGROUND

For ages, books have provided a wealth of information. In 1440, the invention of the Gutenberg printing press revolutionized the book printing world by producing relatively inexpensive books on paper, as opposed to parchment. This infamous idea sparked an information age where other people besides clergy could afford and/or gain access to print books. While several advancements in printing books have occurred over the years, in 1971, Michael Hart, founder of Project Gutenberg, used a Xerox Sigma V mainframe computer to create the first digitized, electronic book (herein an example of an "eBook"). Using the mainframe computer, he typed (i.e., digitized) a copy of the Declaration of Independence. He believed that computers would one day be accessible to the public and decided to make literary works available in electronic form.

Then with the creation of the internet, various eBooks started to gain steam. Initially, eBooks were generally written for specific technical areas. For example, the subject matter may have ranged from technical manuals to manufacturing techniques. These eBooks were meant for a small, specific audience and therefore were few and far between. Then around 2001, some major publishing companies finally took notice of the eBook trend. Consequently, electronics hardware manufacturers began to develop eBook readers (herein individually also referred to as an "eReader") in hopes of capitalizing on the eBook phenomenon. In keeping with this emerging trend, publishers launched online stores and partnered with eReader manufacturers to further establish themselves in the eBook marketplace.

Today, due to the global impact of eBooks, publishers are beginning to homogenize eBook publishing formats and eReader device manufacturers are developing new device models every few months to keep up with the competition. In addition, software developers are creating dedicated eReader software that ultimately displays the eBook on a dedicated eReader device or on multi- purpose access devices such as handheld access devices, smartphones and/or game consoles.

Even with all the advancements in the eBook marketplace, one of the concerns when reading eBooks is the content display on the access device. The content being displayed may be categorized into two areas: inline content and block level content. For instance, inline content may include textual content. To maximize content readability and accessibility, known eReaders implement a reflow mode for textual content where text is paginated to the available screen size based on the user selected font size. With this limitation of known eReaders, as the user increases the font size, the text flows over an increasing number of virtual pages, with less text per page.

Although somewhat satisfactory for textual content where line breaks and hyphenations may be used as necessary to layout the text, this approach is not practical for block level content. Block level content may include aspect ratio sensitive material such as tables, formulas, videos and some images. For example, sizing a complex table to guarantee a horizontal fit may well result in choosing a font size that is not readable for the end user.

To date, consumer eReader platforms such as KINDLE, NOOK™ and IBOOKS have ignored this problem, due, no doubt, to the lack of complex tables and other aspect ratio sensitive material in consumer eReader media. However, for content aimed at professionals, a better solution is needed.

US 2011/0242007 A1 relates to a method and apparatus of providing graphics in an e-book page. It is disclosed to display an e-book page of an e-book on a display, wherein the e-book page includes an embedded moving image object. A multi-touch user input is received via a multi-touch touchscreen associated with the display, wherein the multi-touch user input corresponds to a user input command to animate the moving image object. The embedded moving object may be one of a plurality of embedded moving image objects included in the e-book page and the method and apparatus may receive a plurality of multi-touch user inputs via the multi-touch touchscreen associated with the display, with each multi-touch user input correspond-ing to a respective user input command to animate a respective moving image object. The method and apparatus may then animate each of the plurality of moving image objects in place in the e-book page in response to the plurality of multi-touch user in-puts.

Anon ""CSS overflow Property" from w3schools.org relates to a tutorial for CCS and particularly a CSS overflow property. CSS is a language that describes the style of an HTML document and describes how HTML elements should be displayed. The CSS overflow property specifies what should happen if content overflows an element's box.

US 6 275 829 B1 describes representing a graphic image on a web page with a thumbnail-sized image. An original full-size image is automatically represented by a thumbnail (reduced size) image on a Web page. A user selects the original image that will be represented by the thumbnail image. The thumbnail image is produced and placed into a Web page that is being created or edited. While viewing the Web page, selection of the thumbnail image causes a hyperlink to the original image that is automatically associated with the thumbnail image to be traversed, so that the original image is retrieved and displayed. An auto thumbnail tool dialog box enables the user to define the size of the thumbnail image and to optionally select a border and/or a beveled edge for the thumbnail image. The coloring and the pattern of the border may also be optionally selected by the user.

US 2011/025624 A1 discloses a method for operating an image display device for resizing an image on a touch panel. The method displays an image, and detects an image resizing instruction set for changing a size of the image on the touch panel. The method changes the size of the image on the touch panel based on the image resizing instruction set. In this manner, a user can change the size of the image on the touch panel without inadvertently terminating an image resizing process.

US 7 783 967 B1 relates to packaging web content for reuse. A request to import web content that is packaged within a module manifest into a web page is received. In response to receiving the request to import the web content into the web page, the module manifest is accessed. A view container that includes the web content is identified within the accessed module manifest. The view container is a standard XHTML structural element that has a class attribute that designates the standard XHTML structural element as the view container. The web content is extracted from the view container and embedded in the web page.

Accordingly, the inventors have recognized the necessity for additional improvements in displaying content, particularly inline content and block level content, on a mobile access device.

### SUMMARY

The present invention is defined in the independent claims, to which reference should be made. Advantageous features are set out in the dependent claims. A method includes receiving a signal associated with a markup language file where the markup language file comprises inline content and block level content. The block level content has a first portion and second portion where the first portion and the second portion have a predetermined spatial relation. The method also includes receiving an adjustment instruction adapted to preserve the predetermined spatial relation between the first portion and the second portion. The method also includes generating, in response to the adjustment instruction, a display signal associated with the first portion and the second portion, and then transmitting the display signal.

Advantageously, the present invention allows for a preview (i.e., thumbnail) of a table, for example, while in reflow mode. A reflow mode displays the content over a number of 'virtual,' electronic pages with the number depending on the user selected font size. Once the user selects the thumbnail, a new view of the table is presented, obscuring the text of the book. The new view also has adjustment capabilities (i.e., adjustments) that include zoom in, zoom out, horizontal scroll and vertical scroll. In addition, the aspect ratio of the table is preserved while also retaining the readability the user has come to expect of eReader devices and software.

Also advantageously, the present invention allows for receiving a query and searching within a markup language file (e.g., an eBook), particularly the block level content, for the query expression. If the query expression is found within the block level content, a display signal is generated and transmitted where the display signal is associated with the found query expression in the block level content.

Advantageously, the present invention permits searching for a query expression within a markup language file, particularly the block level content. If the query expression is found within the block level content and is not currently being displayed to the user, an adjustment instruction is made to the display of block level content to ultimately display the query expression to the user.

Additional advantages and/or features of the present invention will be set forth in part in the description. It is to be understood that both the foregoing general description and the following detailed description of the present invention are exemplary and explanatory and are intended to provide further explanation of the present invention as claimed.

### BRIEF DESCRIPTION OF THE DRAWINGS

Figure 1 is an exemplary interface 1000 which corresponds to the prior art.
Figure 1A is an exemplary system 100 which corresponds to one or more embodiments of the invention.
Figure 1B is exemplary eReader software 140 which corresponds to one or more embodiments of the invention.
Figure 2 is an exemplary method 200 which corresponds to one or more embodiments of the invention.
Figure 3 is an exemplary method 300 which corresponds to one or more embodiments of the invention.
Figure 4 is an exemplary interface 400 which corresponds to one or more embodiments of the invention.
Figure 5 is an exemplary interface 500 which corresponds to one or more embodiments of the invention.

### DETAILED DESCRIPTION OF THE EXEMPLARY EMBODIMENT(S)

The description includes many terms with meanings derived from their usage in the art or from their use within the context of the description. However, as a further aid, the following examples are presented. Examples of markup languages, and corresponding markup language files, include HyperText Markup Language (HTML), Extensible Markup Language (XML), Extensible HyperText Markup Language (XHTML) and the like. Markup language files are files written in a markup language. A markup language file may include inline content and block level content. The phrase "inline content" includes elements that are found in the text of markup language file. Inline elements have some specific distinctions from block level elements. Inline elements generally only contain text, data or other inline elements and do not generally begin new lines of text. More particularly, inline content does not include block level content. The phrase "block level content" includes elements that are formatted with a line break or other divider (e.g., line of demarcation) before and after the element thereby creating a standalone block of content. In addition, block level content begins on a new line within the display. Block level content may include inline content such as text. Examples of block level content are tables, non-inline images, formulas and/or videos. The phrase "first portion" exemplifies a portion of block level content that is currently displayed to a user. The phrase "second portion" exemplifies a portion of block level content that currently is not being displayed to a user. The phrase "predetermined spatial relation" includes qualities like ratio, size, distance, volume, order, and time. Examples of predetermined spatial relations are the location of one's seat in the classroom, the space between people in a line, the arrangement of items in a locker or a desk, an aspect ratio of an electronic spreadsheet and/or an image. Examples of adjustment instructions include, but are not limited to, a horizontal scroll, a vertical scroll, a zoom in, a zoom out and/or any combination thereof.

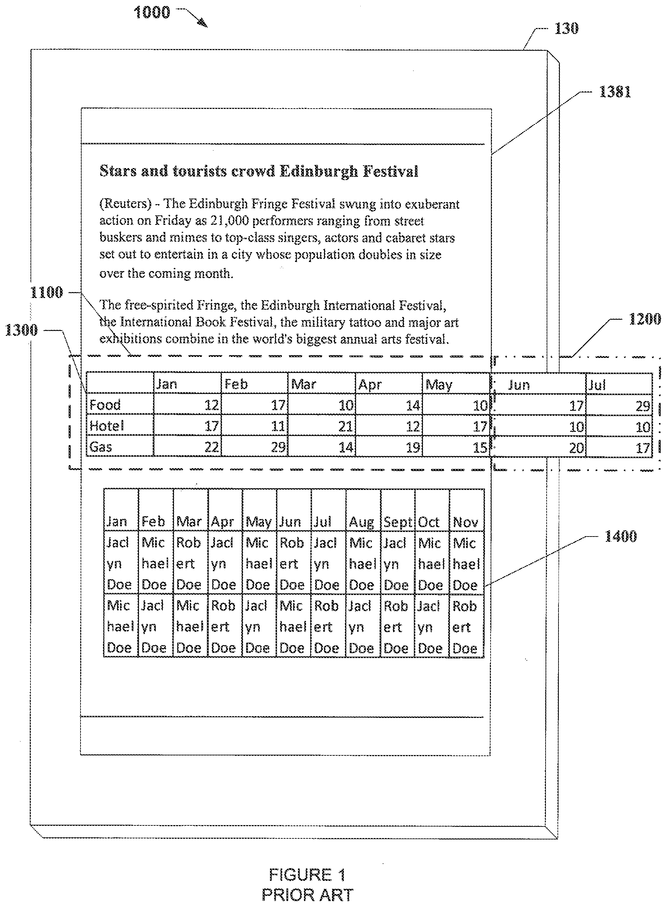

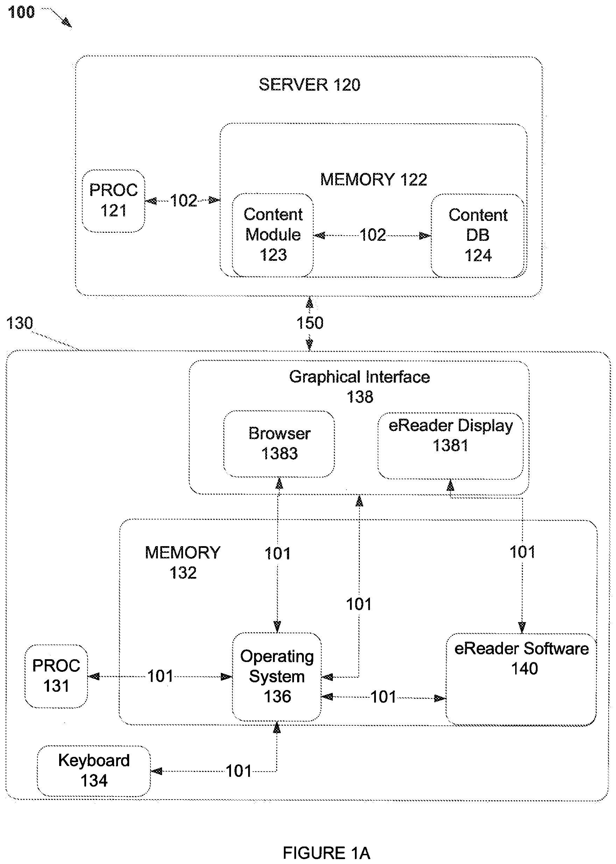

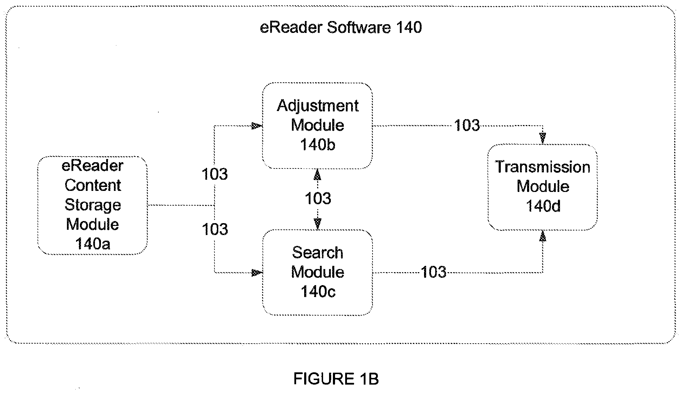

FIG. 1 illustrates two known approaches to displaying block level content (e.g., first table 1300 and second table 1400) on access device 130. Generally, the first known approach displays a table while maintaining the aspect ratio (i.e., predetermined spatial relation). Consequently, maintaining the aspect ratio may permanently cut off a display portion of the table to the user. In other words, the user does not have the option to view the entire table. Turning to an instance of the first known approach, first table 1300 is an example of block level content and includes two portions: a first portion 1100 and a second portion 1200. The first portion 1100 is a portion that is displayed to the user due to the configuration of access device 130. The second portion 1200 is the portion that is not displayed to the user due to the configuration of access device 130. The first known approach to displaying first table 1300 is to maintain the aspect ratio (i.e., predetermined spatial relation) and permanently cut off displaying the second portion 1200 to the user. This known approach does not allow for navigating the block level content to view the second portion 1200. Therefore, the user does not have the option to see and/or adjust to see the second portion 1200. A second known approach to displaying second table 1400 is to disregard the aspect ratio and automatically adjust the second table 1400 to present completely within the eReader display 1381. This known approach provides the severe disadvantage of making the text contained in the second table 1400 difficult to read and comprehend. For example, the first names in the second table 1400 have been severed in order to fit the text within the display parameters.

### Exemplary Document Processing and Information Retrieval System

Figure 1A shows an exemplary system 100, which may be adapted to incorporate the capabilities, functions, methods, and interfaces of the present invention. System 100 includes a server 120 and an access device 130.

Server 120 is generally representative of one or more servers for serving data in the form of a webpage or other markup language with associated applets, ActiveX controls, and/or other related software and data structures. In addition, server 120 transmits a signal via a wireless or wireline transmission channel 150 to at least one access device, such as access device 130. For example, a signal may be associated with a request to download a piece of content (e.g. a tax table) to access device 130, more particularly to eReader content storage module 140a (see FIG. 1B and corresponding description for further discussion). The term "content" includes but is not limited to an electronic document, an eBook, and a markup language file. Types of content may include, but are not limited to, legal, tax, accounting, scientific, healthcare, financial and the like. Server 120 includes a processor 121, a memory 122, wherein the memory 122 further includes a content module 123, and a content database 124. All of these elements are connected via computer bus 102, which is shown in various pathways throughout the server 120. Computer buses 101, 102 and/or 103 (see Figure 1B for computer bus 103) are buses that transmit information between the access device's components/elements and/or between multiple access devices. For example, computer bus 101 and computer bus 102 aid in transmitting information (e.g., a signal) between access device 130 and server 120. Processor 121 may use computer bus 102 to queue a request that is to be transmitted through a signal, from server 120, via a wireless or wireline transmission channel 150 and is then ultimately received by processor 131 through the utilization of computer bus 101. Generally, server 120 transmits the signal via a wireless or wireline transmission channel 150 to at least one access device, such as access device 130.

Processor 121 includes one or more local and/or distributed processors, controllers and/or virtual machines. In the exemplary embodiment, processor module 121 takes any convenient and/or desirable form known to those skilled in the art. Memory 122 takes the exemplary form of one or more electronic, magnetic, and/or optical data-storage devices and stores a content module 123, and a content database 124.

Content module 123 is configured to receive a markup language file and generate a thumbnail from the block level content. A thumbnail is a reduced-sized image. The markup language file may come from various entities such as a 3^{rd} party publisher, an internal publisher and/or any entity that may provide a markup language file. In some embodiments, the received markup language file is tagged with class attributes. The process of tagging is known to those skilled in the art. For instance, tagging occurs by indicating that a certain section of content should be specified a particular way. This indication is known as a tag. The tag notifies the system on how to treat the section of content when, for example, displaying it. A block level content class attribute is an example of a tag. A block level class attribute specifies a section of block level content needing further processing such as thumbnail generation. Thumbnail generation is described herein. In other embodiments, the received markup language file is tagged with a block level class attribute after being received. Regardless of when the block level class attribute is tagged, the block level content class attribute identifies the block level content that needs thumbnail generation within content module 123. Thumbnail generation is a technique in which thumbnails are generated and is known to those skilled in the art. For example, a thumbnail may be generated for a table by using a conversion algorithm that converts the table .xls spreadsheet format into a thumbnail .png image format. The .png image (i.e., a thumbnail) is sized accordingly to make sure it fits on the eReader display 1381. A thumbnail is generated for each instance of block level content that has been tagged with a block level content class attribute. Once the thumbnail is generated, a thumbnail image tag is inserted into the markup language file at the location of block level content in order for the thumbnail to ultimately be displayed to the user. Consequently, the block level content is re-tagged to not render and ultimately not display to the user. For example, a table is tagged within a markup language file by publisher X. The markup language is received and a thumbnail is generated for the table. Once that thumbnail is generated, the section of the markup language file referring to the table is re-tagged so that it does not display to the user. Instead, the thumbnail image tag is inserted and the thumbnail is ultimately displayed to the user.

Content database 124 takes the exemplary form of one or more electronic, magnetic, and/or optical data-storage devices. Content database 124 includes content such as a markup language file and/or a thumbnail. This content may also be considered subscriber content. Subscriber content includes content and related data for controlling, administering, and managing pay-as-you-go and/or subscription based access. For instance, a user may have to purchase an eBook and/or subscribe to an eBook service. The purchased eBook has the format of a markup language file and is stored in the content database 124 until a set of user credentials is authenticated. For instance, user credentials may be a user name and associated password. Once the credentials are successfully authenticated on server 120, a signal, including the markup language file and the associated thumbnails, is transmitted over a wireless or wireline transmission channel 150 to access device 130, in particular eReader content storage module 140a (see Figure 1B). For purposes described herein, successfully authenticating a set of user credentials means the user credentials were accepted by an authentication system (not shown). This successful authentication allows for receiving and/or transmitting the markup language file and associated thumbnails (i.e., the eBook).

Access device 130 is generally representative of one or more access devices. In addition, access device 130 may be mobile or non-mobile. For example, a mobile and/or non-mobile access device may take the form of a personal computer, workstation, personal digital assistant, mobile telephone, smartphone, APPLE® iPad, and/or any other device capable of providing an effective user interface with a server and/or database. Specifically, in this exemplary embodiment, access device 130 is a mobile access device which includes a graphical interface 138, a processor module 131, a memory 132, and a keyboard 134. All of these elements are connected via computer bus 101, which is shown in various pathways throughout the access device 130.

Processor module 131 includes one or more processors, processing circuits, and/or controllers. In the exemplary embodiment, processor module 131 takes any convenient and/or desirable form known to those skilled in the art. Memory 132 is coupled, via computer bus 101, to processor module 131.

A computer readable eReader software 140 (herein also referred to as "eReader software") is stored in memory 132 (e.g. RAM) and/or hard drive (not shown). Memory 132 and hard drive (not shown) are examples of main memory and secondary memory, respectively. Some exemplary embodiments have the eReader software 140 being stored in a computer-readable medium product of any type. In this document, the terms "computer program medium," "computer usable medium," and "computer readable medium" may generally refer to media such as main memory, secondary memory, removable storage drive, a hard disk installed in a hard disk drive and/or other media known to those skilled in the art. The computer readable medium, for example, may include nonvolatile memory, such as a floppy disk, ROM, flash memory, disk drive memory, a CD-ROM, a CD-optical drive or disc and/or other permanent storage. Additionally, a computer readable medium may include, for example, volatile storage such as RAM, buffers, cache memory, and/or network circuits. The processor 131 reads data, instructions, messages or message packets, and other computer readable information from the computer readable medium.

In one exemplary embodiment, memory 132 stores code (machine-readable or executable instructions) for an operating system 136 and eReader software 140. Operating system 136 is coupled to a graphical interface 138 and other various components thereof, via computer bus 101. In the exemplary embodiment, operating system 136 takes the form of a version of the MICROSOFT® WINDOWS® operating system, and browser 1383 takes the form of a version of MICROSOFT® INTERNET EXPLORER®. In addition, operating system 136 interacts, via computer bus 101, with the keyboard 134, the processor 131, and the eReader software 140. For example, the keyboard 134 sends inputs, via computer bus 101, to the operating system 136. The operating system 136 determines that the eReader software 140 is active, accepts the eReader software input as data and stores that data temporarily in memory 132 (e.g. RAM). Each instruction from the eReader software 140 is sent by the operating system 136, via computer bus 101, to the processor 131. These instructions are intertwined with instructions from other programs that the operating system 136 is overseeing before being sent to the processor 131. Operating system 136 and browser 1383 not only receive inputs from keyboard 134, but also support rendering of graphical user interfaces within graphical interface 138.

Graphical interface 138 includes a browser 1383 and an eReader display 1381. When the eReader software 140 is launched, an eReader display 1381 is defined in memory 132 and rendered on graphical interface 138. Upon rendering, the graphical interface 138 presents the data in association with a set of modules from the eReader software 140 as further discussed herein.

FIG. 1B illustrates an exemplary embodiment of the eReader software 140. In some embodiments, the eReader software 140 may be downloaded from server 120 through a signal via a wireless or wireline transmission channel 150. The eReader software 140 is operatively connected to operating system 136, via computer bus 101, and configured to execute the set of modules from memory 132. The modules include an eReader content storage module 140a, an adjustment module 140b, a search module 140c, and a transmission module 140d. Each module is described herein. The eReader content storage module 140a takes the exemplary form of one or more electronic, magnetic, and/or optical data-storage devices. The eReader content storage module 140a is configured to receive and store a markup language file and the associated thumbnails. The markup language file includes inline content and block level content. The block level content includes a first portion and a second portion wherein the first portion and second portion have a predetermined spatial relation. The adjustment module 140b is adapted to receive an adjustment instruction adapted to preserve the predetermined spatial relation between the first portion and the second portion. If a query expression is received, the search module 140c is configured to receive the query expression and search the markup language file, including the block level content, for the query expression. In addition, search module 140c may be executed initially and then adjustment module 140b may be executed. For example, a query expression of "summary judgment" may be received by search module 140c. A search within the markup language file is conducted, including the block level content. Hence, if the query expression is located with the second portion of the block level content, an adjustment instruction may occur thus triggering the adjustment module 140b. After the adjustment module 140b and/or the search module 140c, in operation, have completed execution, the transmission module 140d is configured to generate and transmit a display signal. In some embodiments that execute the adjustment module 140b, the display signal is associated with the first portion and the second portion. In other embodiments that execute the search module 140c, the display signal is associated with the first portion and an indication of a query expression in the block level content. In other embodiments where the search module 140c and adjustment module 140b are executed, the display signal associated with an indication of the query expression in the block level content, the first portion and the second portion.

### Exemplary Method 200 as Conducted by System 100

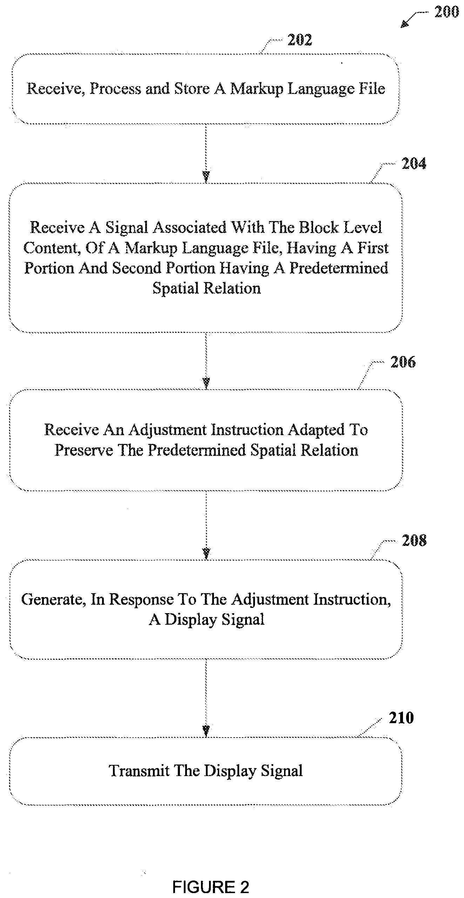

Referring now to FIG. 2, system 100 is configured to implement method 200, which may be adapted to incorporate the capabilities, functions, systems, and interfaces of the present invention. Method 200 includes functional blocks 202-210. These functional blocks perform actions including assignments, decisions, assessments and other like functions.

In some embodiments, prior to method 200 commencing, an eBook publisher, for example, takes a markup language file (e.g., an XHTML file) and tags the block level content for thumbnail generation. Afterwards, the markup language file is uploaded to server 120. Then beginning at step 202, the markup language file is received and the generation of thumbnails occurs on server 120, in particular in the content module 123. The generation of the thumbnails occurs, preferably, on server 120 to simplify the computation time on the access device 130. In addition, the markup language file and associated thumbnails may be stored on server 120, more particularly in the content database 124. Once the markup language file and associated thumbnails are stored, the process moves to step 204.

In step 204, the markup language file and associated thumbnails are transmitted and/or received, via a signal transmission channel 150, and stored, for example, on a mobile access device, more particularly in the eReader content storage module 140a. However in some embodiments, a user may have to authenticate his/her credentials before the markup language file and associated thumbnails may be transmitted, received and/or stored. The markup language file has inline content and block level content. The block level content has a first portion and a second portion where the first and second portions have a predetermined spatial relation. The predetermined spatial relation is determined using various techniques known to those skilled in the art. For example, a table, within the markup language file, has 20 columns and 50 rows. The 20 columns have a total width dimension of 20 inches. The 50 rows have a total height dimension of 10 inches. In order to view this table optimally, the row to column aspect ratio (i.e., predetermined spatial relation) is determined to be 2:1. Another example includes running an algorithm to determine the optimal display ratio (i.e., predetermined spatial relation) for a particular block level content reference within a markup language file. This algorithm may be executed before or while the user invokes the display of block level content. In some embodiments, the predetermined spatial relation may determine that the block level content only includes a first portion. In other words, a table, for example, may fit in its entirety on eReader display 1381 without an adjustment instruction. For example, if the predetermined spatial relation was 600 pixels by 400 pixels and the eReader display 1381 allows for a display between 1200 pixels by 500 pixels, the block level content does not need a second portion if the entire block level content is already being displayed in the first portion.

Prior to step 206 commencing, a user is viewing an eBook with inline content and block level content. While reading, the user is presented with a thumbnail of the block level content. In order to view the block level content, the user should select the thumbnail (e.g., tap on the thumbnail) to ultimately invoke the display of the block level content having a predetermined spatial relation. For example when a user selects a table thumbnail, the table thumbnail image acts as a hyperlink and retrieves the table for display purposes. The retrieved table has a predetermined spatial relation for optimal display to the user. However, only the first portion of the table is initially visible to the user. Then in step 206, an adjustment instruction is received. The adjustment instruction is adapted to preserve the predetermined spatial relation between the first portion and the second portion. Returning to a previous example of a predetermined spatial relation, a table has an aspect ratio of 2:1. Therefore, if a user zooms in (i.e., an adjustment instruction) on the table, the predetermined spatial relation is preserved. In other words, the aspect ratio of the table is maintained in order for the table to be optimally displayed to the user while performing the zoom in adjustment. Once the adjustment instruction is received, the process advances to step 208.

In step 208, a display signal is generated. The display signal, in this embodiment, is associated with the first portion and the second portion. For example, the user wants to adjust the display by scrolling horizontally to the right. The first portion is what is currently being displayed to the user. The second portion is what is not being currently viewed. As a result, the user horizontally scrolls the display so that some part of the second portion may be displayed (i.e., the second portion that becomes visible when scrolling horizontally to the right). In response to the adjustment instruction of the horizontal scroll, the first portion and the second portion are associated with the exemplary display signal. Once the display signal is generated, the process executes step 210.

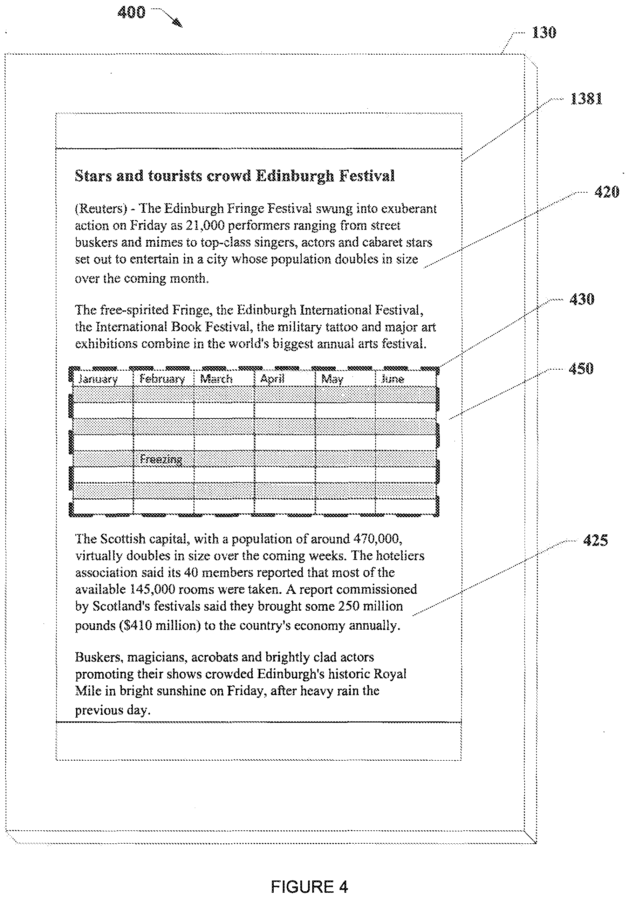

In step 210, a display signal is transmitted and is then ultimately displayed to the user on the eReader display 1381. Display systems and interfaces are described herein and/or are known to those skilled in the art. In particular, reference FIGS. 4-5 for exemplary interfaces illustrating inline content and block level content in addition to exemplary adjustment instructions.

### Exemplary Method 300 as Conducted by System 100

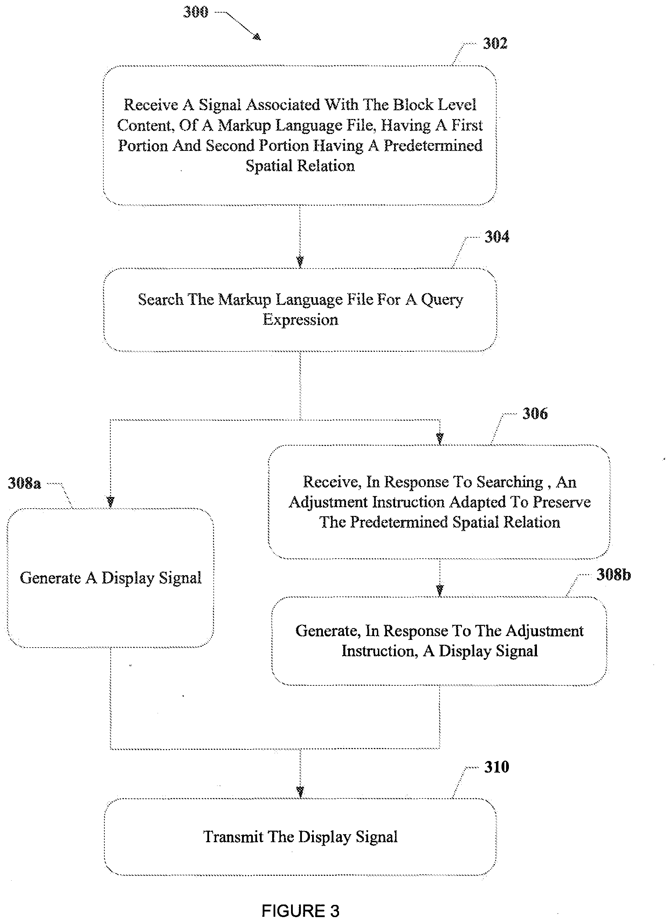

Referring now to FIG. 3, system 100 is configured to implement method 300, which may be adapted to incorporate the capabilities, functions, systems, and interfaces of the present invention. Method 300 includes functional blocks 302-310. These functional blocks are steps that perform actions including assignments, decisions, assessments and other like functions.

In some embodiments, prior to method 300 commencing, an eBook publisher, for example, takes a markup language file (e.g., an XHTML file) and tags the block level content for thumbnail generation. Afterwards, the XHTML file is uploaded to server 120. Then at step 302, the markup language file and associated thumbnails are transmitted and/or received, via a signal transmission channel 150, and stored, for example, on a mobile access device, more particularly in the eReader content storage module 140a. Once the markup language file and associated thumbnails are stored, the process moves to step 304.

Prior to step 304 commencing, a user is viewing an eBook with inline content and block level content. In step 304, a query expression is received and searched for in the markup language file. This query expression may come from the user attempting to search for a query expression within the eBook. For example, the user enters the following query expression "summary judgment" and searches the eBook (i.e., markup language file) for the query expression. In some embodiments, if the query expression is found within a table, a sensory indicator within the table and/or the thumbnail identifies where the query expression resides within the table. Exemplary sensory indicators include highlighting, underlining, shaking of a thumbnail, vibrating of an access device 130, an audio indicators and/or other sensory indicators known to those skilled in the art. For example, when a user is navigating through the instances of the query expression within an eBook, a thumbnail may move in place (e.g., shake) to indicate the query expression resides within the block level content. In another example, if the query expression is found within a table, the query expression may be highlighted within the table and/or the thumbnail may be highlighted indicating that the query expression resides within the table. The highlighted query expression, the highlighted block level content, the shake of thumbnail and/or other sensory indicators are examples of indications of the query expression in the block level content. Then in order to view the query expression within the table, the user invokes the thumbnail to display the predetermined spatial relation table. After step 304, the process proceeds to either step 308a or steps 306, 308b. Each embodiment is discussed herein.

In step 308a, the generation of a display signal is associated with the first portion and an indication of the query expression in the block level content. For instance, once the thumbnail is invoked, the user sees the highlighted query expression in the table on the first portion (i.e., the portion that the user is currently viewing). The first portion and the highlighted query expression in the table are associated with the exemplary display signal. In addition, when the query expression is visible in the first portion, the functionality of method 200 still exists. Therefore, the user may adjust the table to view the second portion after seeing the highlighted query expression. If the query expression is not in the first portion, steps 306 and 308b are executed.

In step 306, an adjustment instruction, in response to searching the markup language file for the query expression, is received. The adjustment instruction is adapted to preserve the predetermined spatial relation between the first portion and the second portion. In some embodiments, for example, the user invokes the thumbnail and a first portion of a table is displayed without displaying the query expression. Next, the user vertically scrolls (i.e., an adjustment instruction) to see the highlighted query expression. In this instance, the user adjusts to display a second portion that includes the highlighted query expression. In other embodiments, after the first portion is determined not to have displayed the query expression, an automatic adjustment to display the second portion occurs to ultimately present the query expression. Once an adjustment instruction is received, the process advances to step 308b.

In step 308b, the generation of a display signal is associated with the first portion, the second portion and an indication of the query expression in the block level content. For example, the user wants to adjust a table by scrolling horizontally. The first portion is what is currently being displayed to the user. The second portion is what is not being currently viewed. As a result, the user adjusts the table so that the query expression located within the second portion of the table is displayed (i.e., the second portion that is visible when scrolling horizontally). The exemplary generated display signal, in response to the adjustment instruction of horizontal scrolling, is associated with the first portion, the second portion and the highlighted query expression in the table. Whether step 308a or 308b were executed, the process continues to step 310.

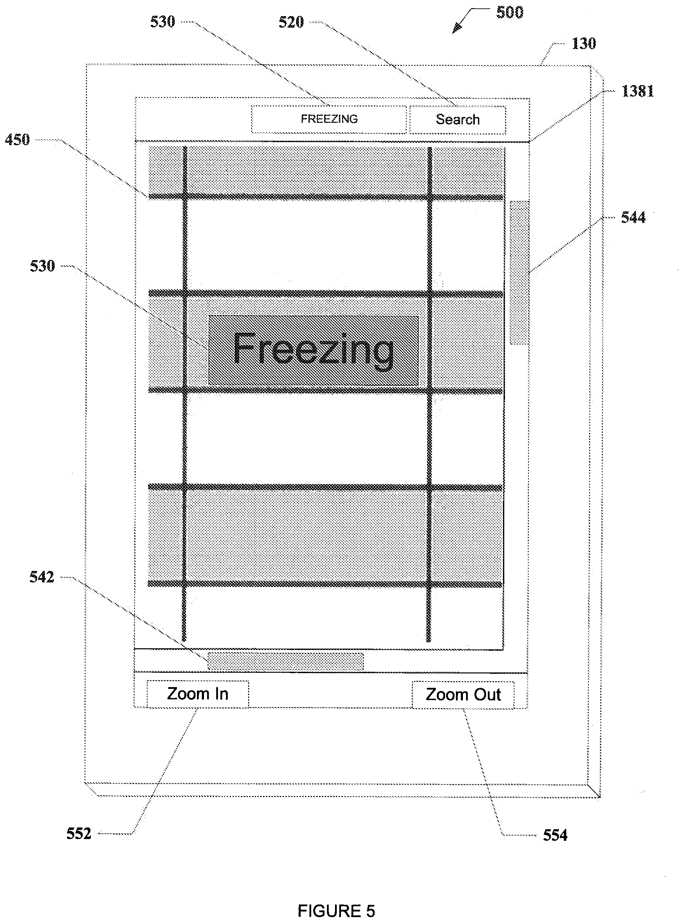

In step 310, a display signal is transmitted to eReader display 1381. The display signal is then ultimately displayed to the user on the eReader display 1381. Display systems and interfaces are described herein and/or are known to those skilled in the art. In particular, reference FIG. 5 for exemplary interfaces illustrating a query expression in block level content in addition to exemplary adjustment instructions.

### Exemplary Interfaces

Figures 4-5 show exemplary interfaces for system 100 and methods 200 & 300. FIG. 4 illustrates an exemplary eReader display 1381 on an access device 130, for this example, an APPLE® iPad. EReader display 1381 displays an electronic book page (i.e., a section of a markup language file). Within the eReader display 1381 there is an example of inline content 420, 425 and a thumbnail 430 of block level content 450. In this example, a user is reading an article about the Edinburgh festival. The article contains text (i.e., inline content 420, 425) and a thumbnail 430 of a table (i.e., block level content 450). While reading the text of the article, the user comes upon a thumbnail of a table. In some embodiments, the thumbnail table is legible. In others, the thumbnail table is illegible because of the image's reduced size. Either way, if the user would like to see an optimal version of the table, the user invokes the thumbnail 430 by tapping on it. Once invoked, a new view (see Figure 5) is presented to the user with the first portion of the block level content being displayed.

FIG. 5 illustrates the new view within the eReader display 1381 of the block level content 450. In some embodiments, the first portion being displayed could be the original first portion which displays an indication of the query expression "freezing." In other embodiments, the first portion being displayed could have been, previously, an adjustment instruction to facilitate displaying an indication of the query expression "freezing." The adjustment instruction and/or adjustment instructions that may have been used are a horizontal scroll enabled by engaging a horizontal scroll bar 542, a vertical scroll enabled by engaging a vertical scroll bar 544, a zoom in enabled by engaging a zoom in button 552, and a zoom out enabled by engaging a zoom out button 554. These adjustment instructions are well known to those skilled in the art. In addition, FIG. 5 illustrates a query expression box 530 where a user inputs a query expression and clicks the search button 520 to initiate system 100 and method 300 for searching within an eBook.

The embodiments described above and in the claims are intended only to illustrate and teach one or more ways of practicing or implementing the present invention, not to restrict its breadth or scope. For example, the eReader software 140 may be stored elsewhere besides the memory 132 of the access device 130. Any location within the access device 130 where data can be temporarily and/or permanently stored is acceptable, In another example, FIG. 1 shows browser 1383 and eReader display 1381 as having the ability to display simultaneously. However, in operation, some embodiments may present them at separate times.

## Claims

1. A method comprising:
a. receiving for display on an access device, a signal associated with a markup language file, the markup language file comprises inline content, block level content and one or more thumbnails associated with the block level content, the markup language file being tagged with one or more block level class attributes and at least one thumbnail image tag associated with the one or more thumbnails;
b. searching the markup language file for a query expression;
c. if the query is found in the block level content, generating a display from the block level content in response to a user selection of the one or more thumbnails associated with the block level content; and
d. in response to a received adjustment instruction, redisplaying the displayed block level content with an aspect ratio maintained in order to preserve a predetermined spatial relation between a first portion and a second portion of the displayed block level content.

2. The method of claim 1 further comprising:
if the query expression is located in the first portion of the displayed block level content, automatically displaying the first portion of the block level content; and
if the query expression is located in the second portion of the displayed block level content, automatically displaying the second portion of the block level content.

3. The method of claim 2 wherein the block level content is at least one of a table, an image, a formula and a video.

4. The method of claim 2 wherein the predetermined spatial relation is an aspect ratio.

5. The method of claim 2 wherein the adjustment instruction comprises at least one of a horizontal scroll, a vertical scroll, a zoom in and a zoom out.

6. An access device comprising:
a. an eReader content storage module configured to receive a signal associated a markup language file, the markup language file comprising inline content, block level content and one or more thumbnails associated with the block level content, the markup language file being tagged with one or more block level class attributes and at least one thumbnail image tag associated with the one or more thumbnails;
b. a search module configured to search the markup language file for a query expression; and
c. a transmission module configured to generate and transmit a display signal for displaying the block level content in response to a user selection of the one or more thumbnails associated with the block level content and an indication of the query expression in the block level content, the displayed block level content including a first portion and second portion having a predetermined spatial relation; and
d. an adjustment module configured to receive an adjustment instruction, and in response to the received adjustment instruction, configured to transmit a signal to the transmission module to cause the transmission module to redisplay the block level content with an aspect ratio maintained so that the predetermined spatial relation between the first portion and the second portion is preserved.

7. The access device of claim 6 wherein the transmission module is further configured to automatically redisplay the first portion of the block level content if the query expression is located in the first portion of the displayed block level content, and to automatically redisplay the second portion of the block level content if the query expression is located in the second portion of the displayed block level content.

8. The access device of claim 7 wherein the block level content is at least one of a table, an image, a formula and a video.

9. The access device of claim 7 wherein the predetermined spatial relation is an aspect ratio.

10. The access device of claim 7 wherein the adjustment instruction comprises at least one of a horizontal scroll, a vertical scroll, a zoom in and a zoom out.

## Patentansprüche

1. Verfahren, das Folgendes umfasst:
a. Empfangen, für eine Anzeige auf einer Zugriffsvorrichtung, eines Signals, das einer Markup-Sprachdatei zugehörig ist, wobei die Markup-Sprachdatei Inline-Inhalt, Inhalt auf Blockebene und eine oder mehrere Miniaturansichten, die dem Inhalt auf Blockebene zugehörig sind, umfasst, wobei die Markup-Sprachdatei mit einer oder mehreren Klassenattributen auf Blockebene und wenigstens einem Miniaturansichtsbildkennzeichen, das der einen oder den mehreren Miniaturansichten zugehörig ist, gekennzeichnet ist;
b. Durchsuchen der Markup-Sprachdatei nach einem Abfrageausdruck;
c. wenn die Abfrage in dem Inhalt auf Blockebene gefunden wird, Erzeugen einer Anzeige aus dem Inhalt auf Blockebene als Reaktion auf eine Benutzerauswahl der einen oder der mehreren Miniaturansichten, die dem Inhalt auf Blockebene zugehörig sind; und
d. als Reaktion auf eine empfangene Anpassungsanweisung, erneutes Anzeigen des angezeigten Inhalts auf Blockebene mit einem Seitenverhältnis, das beibehalten wird, um eine zuvor bestimmte räumliche Beziehung zwischen einem ersten Abschnitt und einem zweiten Abschnitt des angezeigten Inhalts auf Blockebene zu erhalten.

2. Verfahren nach Anspruch 1, das ferner Folgendes umfasst:
wenn sich der Abfrageausdruck in dem ersten Abschnitt des angezeigten Inhalts auf Blockebene befindet, automatisches Anzeigen des ersten Abschnitts des Inhalts auf Blockebene; und
wenn sich der Abfrageausdruck in dem zweiten Abschnitt des angezeigten Inhalts auf Blockebene befindet, automatisches Anzeigen des zweiten Abschnitts des Inhalts auf Blockebene.

3. Verfahren nach Anspruch 2, wobei der Inhalt auf Blockebene eine Tabelle, ein Bild, eine Formel und/oder ein Video ist.

4. Verfahren nach Anspruch 2, wobei die zuvor bestimmte räumliche Beziehung ein Seitenverhältnis ist.

5. Verfahren nach Anspruch 2, wobei die Anpassungsanweisung einen horizontalen Bilddurchlauf, einen vertikalen Bilddurchlauf, eine Vergrösserung und/oder eine Verkleinerung umfasst.

6. Zugriffsvorrichtung, die Folgendes umfasst:
a. ein E-Reader-Inhaltsspeichermodul, das konfiguriert ist, um ein Signal zu empfangen, das einer Markup-Sprachdatei zugehörig ist, wobei die Markup-Sprachdatei Inline-Inhalt, Inhalt auf Blockebene und eine oder mehrere Miniaturansichten, die dem Inhalt auf Blockebene zugehörig sind, umfasst, wobei die Markup-Sprachdatei mit einer oder mehreren Klassenattributen auf Blockebene und wenigstens einem Miniaturansichtsbildkennzeichen, das der einen oder den mehreren Miniaturansichten zugehörig ist, gekennzeichnet ist;
b. ein Suchmodul, das konfiguriert ist, um die Markup-Sprachdatei nach einem Abfrageausdruck zu durchsuchen; und
c. ein Übertragungsmodul, das konfiguriert ist, um ein Anzeigesignal zum Anzeigen des Inhalts auf Blockebene als Reaktion auf eine Benutzerauswahl der einen oder der mehreren Miniaturansichten, die dem Inhalt auf Blockebene zugehörig sind, und eines Hinweises auf den Abfrageausdruck in dem Inhalt auf Blockebene zu erzeugen und zu übertragen, wobei der angezeigte Inhalt auf Blockebene einen ersten Abschnitt und einen zweiten Abschnitt, die eine zuvor bestimmte räumliche Beziehung aufweisen, einschliesst; und
d. ein Anpassungsmodul, das konfiguriert ist, um eine Anpassungsanweisung zu empfangen, und als Reaktion auf die empfangene Anpassungsanweisung konfiguriert ist, um ein Signal an das Übertragungsmodul zu übertragen, um zu bewirken, dass das Übertragungsmodul den Inhalt auf Blockebene mit einem Seitenverhältnis, das beibehalten wird, so dass die zuvor bestimmte räumliche Beziehung zwischen dem ersten Abschnitt und dem zweiten Abschnitt erhalten wird, erneut anzeigt.

7. Zugriffsvorrichtung nach Anspruch 6, wobei das Übertragungsmodul ferner konfiguriert ist, um den ersten Abschnitt des Inhalts auf Blockebene automatisch erneut anzuzeigen, wenn sich der Abfrageausdruck in dem ersten Abschnitt des angezeigten Inhalts auf Blockebene befindet, und um den zweiten Abschnitt des Inhalts auf Blockebene automatisch erneut anzuzeigen, wenn sich der Abfrageausdruck in dem zweiten Abschnitt des angezeigten Inhalts auf Blockebene befindet.

8. Zugriffsvorrichtung nach Anspruch 7, wobei der Inhalt auf Blockebene eine Tabelle, ein Bild, eine Formel und/oder ein Video ist.

9. Zugriffsvorrichtung nach Anspruch 7, wobei die zuvor bestimmte räumliche Beziehung ein Seitenverhältnis ist.

10. Zugriffsvorrichtung nach Anspruch 7, wobei die Anpassungsanweisung einen horizontalen Bilddurchlauf, einen vertikalen Bilddurchlauf, eine Vergrösserung und/oder eine Verkleinerung umfasst.

## Revendications

1. Procédé comprenant :
a. la réception pour affichage sur un dispositif d'accès, d'un signal associé à un fichier de langage de balisage, le fichier de langage de balisage comprenant un contenu inclus, un contenu de niveau bloc et une ou plusieurs miniatures associées au contenu de niveau bloc, le fichier de langage de balisage étant balisé avec un ou plusieurs attributs de classe de niveau bloc et au moins une balise d'image miniature associée à une ou à plusieurs miniatures ;
b. la recherche dans le fichier de langage de balisage d'une expression de requête ;
c. si la requête est trouvée dans le contenu de niveau bloc, la génération d'un affichage à partir du contenu de niveau bloc en réponse à une sélection par l'utilisateur de la ou des miniatures associées au contenu de niveau bloc ; et
d. en réponse à une instruction d'ajustement reçue, le réaffichage du contenu de niveau bloc affiché avec un rapport hauteur-largeur maintenu afin de conserver une relation spatiale prédéterminée entre une première partie et une seconde partie du contenu de niveau bloc affiché.

2. Procédé selon la revendication 1, comprenant en outre :
si l'expression de requête est située dans la première partie du contenu de niveau bloc affiché, l'affichage automatique de la première partie du contenu de niveau bloc ; et
si l'expression de requête est située dans la seconde partie du contenu de niveau bloc affiché, l'affichage automatique de la seconde partie du contenu de niveau bloc.

3. Procédé selon la revendication 2, dans lequel le contenu de niveau bloc est une table et/ou une image et/ou une formule et/ou une vidéo.

4. Procédé selon la revendication 2, dans lequel la relation spatiale prédéterminée est un rapport hauteur-largeur.

5. Procédé selon la revendication 2, dans lequel l'instruction d'ajustement comprend un défilement horizontal et/ou un défilement vertical et/ou un zoom avant et/ou un zoom arrière.

6. Dispositif d'accès comprenant :
a. un module de stockage de contenu de liseuse numérique configuré pour recevoir un signal associé à un fichier de langage de balisage, le fichier de langage de balisage comprenant un contenu inclus, un contenu de niveau bloc et une ou plusieurs miniatures associées au contenu de niveau bloc, le fichier de langage de balisage étant balisé avec un ou plusieurs attributs de classe de niveau bloc et au moins une balise d'image de miniature associée à une ou à plusieurs miniatures ;
b. un module de recherche configuré pour rechercher dans le fichier de langage de balisage une expression de requête ; et
c. un module d'émission configuré pour générer et émettre un signal d'affichage pour afficher le contenu de niveau bloc en réponse à une sélection par l'utilisateur d'une ou de plusieurs miniatures associées au contenu de niveau bloc et une indication de l'expression de requête dans le contenu de niveau bloc, le contenu de niveau bloc affiché comportant une première partie et une seconde partie ayant une relation spatiale prédéterminée ; et
d. un module d'ajustement configuré pour recevoir une instruction d'ajustement, et en réponse à l'instruction d'ajustement reçue, configuré pour émettre un signal au module d'émission afin d'amener le module d'émission à réafficher le contenu de niveau bloc avec un rapport hauteur-largeur maintenu de sorte que la relation spatiale prédéterminée entre la première partie et la seconde partie est préservée.

7. Dispositif d'accès selon la revendication 6, dans lequel le module d'émission est en outre configuré pour réafficher automatiquement la première partie du contenu de niveau bloc si l'expression de requête est située dans la première partie du contenu de niveau bloc affiché, et pour réafficher automatiquement la seconde partie du contenu de niveau bloc si l'expression de requête est située dans la seconde partie du contenu de niveau bloc affiché.

8. Dispositif d'accès selon la revendication 7, dans lequel le contenu de niveau bloc est une table et/ou une image et/ou une formule et/ou une vidéo.

9. Dispositif d'accès selon la revendication 7, dans lequel la relation spatiale prédéterminée est un rapport hauteur-largeur.

10. Dispositif d'accès selon la revendication 7, dans lequel l'instruction d'ajustement comprend un défilement horizontal et/ou un défilement vertical et/ou un zoom avant et/ou un zoom arrière.
